# EUROPÄISCHE PATENTANMELDUNG

(11) **EP 0 917 116 A2**
(43) Veröffentlichungstag der Anmeldung: **19.05.1999**
(21) Anmeldenummer: 98121653.4
(22) Anmeldetag: 12.11.1998
(51) Int. Cl.: G07F 7/08, G07F 7/10

(54) **Verfahren zur Sicherung einer elektronischen Geldbörse gegen übermässige Benutzung und elektronische Geldbörse**

(30) Priorität: 17.11.1997 DE 19750849
(71) Anmelder: Deutsche Telekom AG, 53113 Bonn (DE)
(72) Erfinder: Hartleif, Siegfrid, 64823 Gross-Umstadt (DE)

(57) **Zusammenfassung**

Bei einem Verfahren zur Sicherung einer durch Übertragung von einem Konto ladbaren elektronischen Geldbörse gegen übermäßige Benutzung und bei einer elektronischen Geldbörse, wobei zum Laden ein Ladekommando von einer Autorisierungseinrichtung empfangen wird, wird ein Maximalbetrag abgelegt. Ein von der Summe aller in einem vorgegebenen Zeitraum geladenen Beträge abhängiger Betrag wird gebildet. Ein weiteres Laden wird unterbunden, wenn durch die Summe aller in dem vorgegebenen Zeitraum geladenen Beträge der Maximalbetrag erreicht oder überschritten würde.

## Beschreibung

Die Erfindung betrifft ein Verfahren zur Sicherung einer durch Übertragung von einem Konto ladbaren elektronischen Geldbörse gegen übermäßige Benutzung, wobei zum Laden ein Ladekommando von einer Autorisierungseinrichtung empfangen wird, und eine elektronische Geldbörse.

Eine wesentliche Eigenschaft elektronischer Geldbörsen ist deren Nachladbarkeit. Ist der Betrag auf der Karte erschöpft, kann vom Benutzer der elektronischen Geldbörse sogenanntes elektronisches Geld in einen gesicherten Speicherbereich der Geldbörse, die im allgemeinen als Chipkarte ausgebildet ist, nachgeladen werden. Bei kontogebundenen Geldbörsensystemen wird der Nachladebetrag vom Konto des Karteninhabers abgebucht und dem Konto des Börsenbetreibers gutgeschrieben. Da beim Nachladevorgang in der Regel nicht unmittelbar (online) auf das Konto des Karteninhabers zugegriffen wird, sondern eine Verbindung zu einer Autorisierungseinrichtung aufgebaut wird, kann es längere Zeit dauern, bis der Börsenbetreiber darüber Kenntnis erhält, daß das Konto des Karteninhabers nicht gedeckt ist oder dieser eine Rücklastschrift veranlaßt hat.

Bekannte Geldbörsensysteme enthalten Maximalbeträge, bis zu deren Höhe eine Aufladung vorgenommen werden kann. Wenn aber in betrügerischer Absicht in sehr kurzen Zeiträumen immer wieder nachgeladen wird und die geladenen Maximalbeträge kurzfristig verbraucht werden, indem wiederveräußerbare Güter wie beispielsweise Zigaretten aus Automaten gekauft werden, können in kurzen Zeitspannen hohe Forderungen gegenüber dem Konto des Karteninhabers entstehen. Über vorangegangene Bonitätsprüfungen läßt sich dieses Risiko nur teilweise begrenzen.

Aufgabe der Erfindung ist es deshalb, ein Verfahren und eine Geldbörse mit einer Sicherung gegen übermäßige Benutzung anzugeben.

Diese Aufgabe wird bei dem erfindungsgemäßen Verfahren dadurch gelöst, daß ein Maximalbetrag abgelegt wird, daß ein von der Summe aller in einem vorgegebenen Zeitraum geladenen Beträge abhängiger Betrag gebildet wird und daß ein weiteres Laden unterbunden wird, wenn durch die Summe aller in dem vorgegebenen Zeitraum geladenen Beträge der Maximalbetrag erreicht oder überschritten würde.

Dabei kann der von der Summe abhängige Betrag die Summe selbst sein, die dann jeweils mit dem Maximalbetrag verglichen wird. Es ist jedoch auch möglich, den abhängigen Betrag durch Subtraktion der jeweils geladenen Beträge vom Maximalbetrag zu bilden und den Maximalbetrag als erreicht anzusehen, wenn der abhängige Betrag zu Null wird.

Im einzelnen ist bei dem erfindungsgemäßen Verfahren vorgesehen, daß ein in einem Datenfeld abgelegter Zeitraum den vorgegebenen Zeitraum bildet, daß auf ein Ladekommando, das eine Zeitangabe enthält,
- der Ladevorgang abgebrochen wird, wenn die Zeitangabe innerhalb des abgelegten Zeitraumes liegt und wenn dadurch der Maximalbetrag erreicht oder überschritten würde,
- der Ladevorgang zu Ende geführt wird und die Summe um den geladenen Betrag erhöht wird, wenn die Zeitangabe innerhalb des abgelegten Zeitraums liegt und wenn der Maximalbetrag durch das Laden nicht erreicht oder überschritten wird, und
- der abgelegte Zeitraum mit einem der Zeitangabe entsprechenden Zeitraum überschrieben wird, der Ladevorgang fortgesetzt wird und die Summe auf den geladenen Betrag gesetzt wird, wenn die Zeitangabe nach dem abgelegten Zeitraum liegt.

Der vorgegebene Zeitraum kann beispielsweise ein Kalendermonat sein, wobei durch einen in einem späteren Kalendermonat erfolgenden Ladevorgang die Summe auf den neuen Betrag gesetzt wird. Es ist im Rahmen der Erfindung jedoch auch möglich, den Zeitraum mitzuführen, so daß bei jedem Ladevorgang jeweils die in dem unmittelbar vorangegangenen Zeitraum erfolgten Ladungen berücksichtigt werden.

Bei dem erfindungsgemäßen Verfahren können der Maximalbetrag, die Summe und/oder der vorgegebene Zeitraum in der Autorisierungseinrichtung oder in der elektronischen Geldbörse abgelegt sein. Die Ablage in der Geldbörse hat den Vorteil, daß zusätzliche Strukturen zur Überwachung der Summe innerhalb einer zentralen Kartenverwaltung des Betreibers nicht erforderlich sind. Wird jedoch die Summe in der Autorisierungseinrichtung abgelegt und entsprechend aktualisiert, können Plausibilitätsprüfungen, die an sich zur Verhinderung von Mißbrauch bekannt sind, verbessert werden.

Je nach erwarteter Bonität des Karteninhabers kann ein unterschiedlicher Maximalbetrag - im folgenden auch zeitbezogener Maximalbetrag genannt - abgelegt werden. Dies kann mit der Personalisierung der elektronischen Geldbörse geschehen, wozu bei der Prüfung des entsprechenden Antrages über die Bonität entschieden und der entsprechende zeitbezogene Maximalbetrag zusätzlich mit den übrigen Antragsdaten in ein Verwaltungssystem eingegeben wird.

Im Falle einer Speicherung des zeitbezogenen Maximalbetrages in der elektronischen Geldbörse wird der zeitbezogene Maximalbetrag bei der Personalisierung zusammen mit den übrigen Daten unter Beachtung der Zugangsbedingungen in die Geldbörse geladen.

Der zeitbezogene Maximalbetrag kann gegebenenfalls später verändert werden, wenn dem Karteninhaber der ursprüngliche Maximalbetrag nicht ausreicht und sich der Börsenbetreiber von der Bonität des Kunden überzeugt hat. Eine Veränderung sollte nur nach Online-Kopplung zur Autorisierungseinrichtung und nach Autorisierung mit dem für das den Maximalbetrag enthaltene Datenfile gültigen Zugangschlüssel des Börsenbetreibers möglich sein.

Mit einer erfindungsgemäßen elektronischen Geldbörse wird die Aufgabe dadurch gelöst, daß ein weiterer Speicherbereich für einen Maximalbetrag vorgesehen ist, der die zulässige Summe aller in einem vorgegebenen Zeitraum zu ladenden Beträge darstellt.

Eine Sicherung gegen Mißbrauch durch Änderung des Maximalbetrages durch den Karteninhaber und trotzdem eine nachträgliche Änderung des Maximalbetrages durch den Betreiber ist bei der erfindungsgemäßen elektronischen Geldbörse dadurch möglich, daß der abgelegte Maximalbetrag nach Autorisierung mit einem dafür vergebenen Zugangsschlüssel veränderbar ist.

Eine vorteilhafte Ausgestaltung der Erfindung besteht darin, daß ein anderer Speicherbereich zur Aufnahme des vorgegebenen Zeitraums vorgesehen ist, der überschreibbar ist, wenn ein Ladekommando eintrifft, das eine Zeitangabe enthält, die nach dem abgelegten Zeitraum liegt und daß dann die in einem zusätzlichen Speicherbereich abgelegte Summe der im vorgegebenen Zeitraum geladenen Beträge zurücksetzbar ist, wobei die Summe auf den dann zu ladenden Betrag gesetzt wird, wenn dieser nicht den zulässigen Maximalbetrag überschreitet.

Ferner kann bei der elektronischen Geldbörse vorgesehen sein, daß ein in der elektronischen Geldbörse gespeichertes Programm den jeweils zu ladenden Betrag zur Summe aller im vorgegebenen Zeitraum geladenen Beträge addiert, sofern im Ladekommando kein späterer Zeitraum enthalten ist und der Maximalbetrag nicht überschritten wird.

Ausführungsbeispiele der Erfindung sind in der Zeichnung anhand mehrerer Figuren dargestellt und in der nachfolgenden Beschreibung näher erläutert. Es zeigt:
- Fig. 1: ein Ablaufdiagramm, das die in der Geldbörse und in einer Autorisierungseinrichtung stattfindenden Maßnahmen beim Ladevorgang darstellt, und
- Fig. 2: einen Teil eines Datenfiles auf einer erfindungsgemäßen Chipkarte.

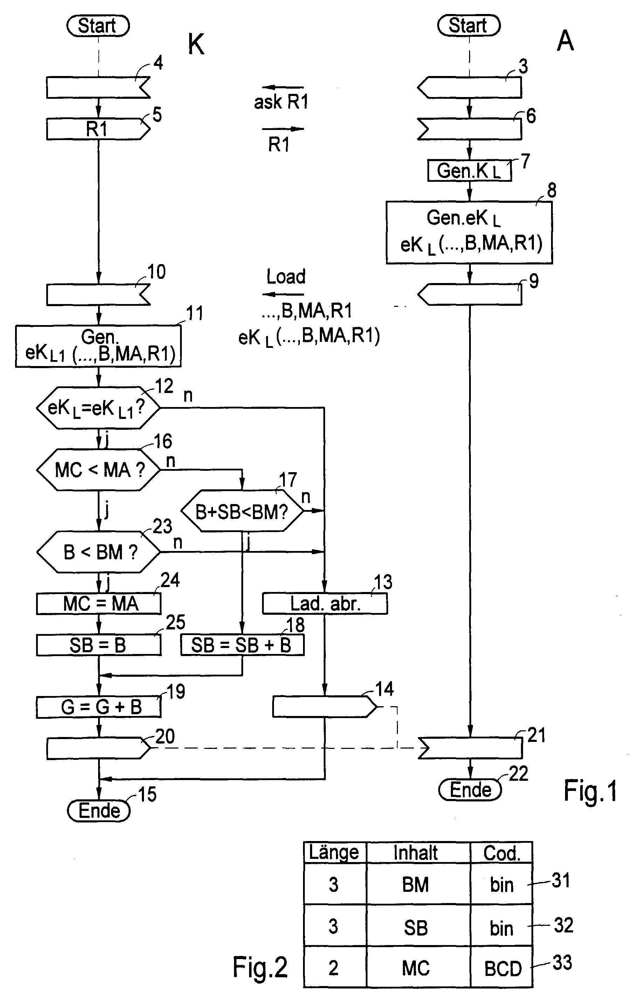

Fig. 1 stellt als Ausschnitt aus umfassenderen Programmen die jeweils zum Laden der Geldbörse - im folgenden auch Karte genannt - erforderlichen Programmschritte in der Karte K und in der Autorisierungseinrichtung A sowie den Austausch von Daten zwischen beiden Einrichtungen dar. Auf jeweils einen Start 1, 2 der Programme folgen Schritte, deren Erläuterung zum Verständnis der Erfindung nicht erforderlich ist und die daher nicht dargestellt sind. Unter anderem wird eine Authentifikation der Karte, eine PIN-Prüfung und die Ableitung des kartenindividuellen Ladeschlüssels K_{L} durchgeführt.

Bei 3 erfolgt eine Anfrage durch die Autorisierungseinrichtung A an die Karte K nach einer Zufallszahl R1, die bei 4 in der Karte K eintrifft. Daraufhin wird bei 5 die Zufallszahl R1 generiert und zur Autorisierungseinrichtung A übertragen, wo sie bei 6 empfangen wird. Dann generiert die Autorisierungseinrichtung das Ladekommando im Programmschritt 7, wobei ein vom Karteninhaber zuvor eingegebener Betrag B benutzt wird. Die Zufallszahl R1 stellt die Einmaligkeit des Ladekommandos sicher. Aus kartenindividuellen Daten, die in der Figur lediglich mit Punkten angedeutet sind, dem Betrag, der aktuellen Monatsangabe MA und der Zufallszahl R1 wird bei 8 ein Kryptogramm eK_{L} erzeugt, das bei 9 zusammen mit den unverschlüsselten Daten zur Karte K gesendet und dort bei 10 empfangen wird.

Im Programmschritt 11 wird aus den unverschlüsselten bei 10 empfangenen Daten ein weiteres Kryptogramm eK_{L1} (..., B, MA, R1) generiert. Bei 12 wird geprüft, ob eK_{L} und eK_{L1} gleich sind. Ist dieses nicht der Fall, wird der Ladevorgang bei 13 abgebrochen, wonach bei 14 eine Fehlermeldung an die Autorisierungseinrichtung A gesendet und bei 15 das Programm beendet wird.

Wird jedoch bei 12 Gleichheit festgestellt, erfolgt bei 16 eine Prüfung, ob der in der Karte K gespeicherte Monat MC kleiner als der von der Autorisierungseinrichtung A übertragene Monat MA ist. Ist dieses nicht der Fall, bedeutet dies, daß die Karte in dem gleichen Monat MA bereits einmal geladen wurde. Es wird deshalb bei 17 geprüft, ob die bisher gespeicherte Summe SB zuzüglich des zu ladenden Betrages B bereits den zeitbezogenen Maximalbetrag BM, der in der Karte gespeichert ist, erreicht hat. Ist dieses der Fall, wird ebenfalls bei 13 die Ladung abgebrochen. Ist der Maximalbetrag noch nicht erreicht, wird bei 18 der zu ladende Betrag der bis dahin gültigen Summe SB hinzuaddiert, worauf bei 19 der eigentliche Ladevorgang stattfindet, nämlich die Erhöhung des in der Karte vorhandenen Guthabens G um den zu ladenden Betrag B. Daraufhin wird bei 20 eine Meldung über den erfolgten Ladevorgang zur Autorisierungseinrichtung A gesendet, die bei 21 dort empfangen wird. Daraufhin werden die Programme bei 15 bzw. 22 beendet.

Wird bei 16 festgestellt, daß MC kleiner als MA ist, daß nämlich der Ladevorgang in einem späteren Monat als demjenigen Monat, der auf der Karte gespeichert ist, stattfindet, wird bei 23 geprüft, ob der zu ladende Betrag kleiner als der Maximalbetrag ist. Ist dieses nicht der Fall, wird der Ladevorgang bei 13 abgebrochen. Ist der zu ladende Betrag jedoch kleiner, wird bei 24 der gespeicherte Monat MC auf den aktuellen Monat MA gesetzt, worauf bei 25 die Summe SB auf den zu ladenden Betrag gesetzt wird. Daran schließt sich der Ladevorgang 19 an.

Fig. 2 zeigt einen Teil des im Speicher der Karte vorgesehenen Datenfiles, der zur Durchführung des erfindungsgemäßen Verfahrens vorgesehen ist, in Form einer Tabelle. Dabei ist in einem ersten Datenfeld 31 der zeitbezogene Maximalbetrag BM binär codiert mit einer Länge von drei Byte abgelegt. Ein zweites Datenfeld 32 ist für die Summe der bereits im jeweiligen Zeitraum vorgesehenen Beträge SB vorgesehen, die ebenfalls mit einer Länge von drei Byte binär codiert ist. Schließlich enthält das Datenfile ein Datenfeld 33 für den Bezugmonat MC, der mit einer Länge von 2 Byte BCD-codiert ist.

## Patentansprüche

1. Verfahren zur Sicherung einer durch Übertragung von einem Konto ladbaren elektronischen Geldbörse gegen übermäßige Benutzung, wobei zum Laden ein Ladekommando von einer Autorisierungseinrichtung empfangen wird, dadurch gekennzeichnet, daß ein Maximalbetrag abgelegt wird, daß ein von der Summe aller in einem vorgegebenen Zeitraum geladenen Beträge abhängiger Betrag gebildet wird und daß ein weiteres Laden unterbunden wird, wenn durch die Summe aller in dem vorgegebenen Zeitraum geladenen Beträge der Maximalbetrag erreicht oder überschritten würde.

2. Verfahren nach Anspruch 2, dadurch gekennzeichnet, daß ein in einem Datenfeld abgelegter Zeitraum den vorgegebenen Zeitraum bildet, daß auf ein Ladekommando, das eine Zeitangabe enthält,
- der Ladevorgang abgebrochen wird, wenn die Zeitangabe innerhalb des abgelegten Zeitraumes liegt und wenn dadurch der Maximalbetrag erreicht oder überschritten würde,
- der Ladevorgang zu Ende geführt wird und die Summe um den geladenen Betrag erhöht wird, wenn die Zeitangabe innerhalb des abgelegten Zeitraums liegt und wenn der Maximalbetrag durch das Laden nicht erreicht oder überschritten wird, und
- der abgelegte Zeitraum mit einem der Zeitangabe entsprechenden Zeitraum überschrieben wird, der Ladevorgang fortgesetzt wird und die Summe auf den geladenen Betrag gesetzt wird, wenn die Zeitangabe nach dem abgelegten Zeitraum liegt.

3. Verfahren nach einem der vorhergehenden Ansprüche, dadurch gekennzeichnet, daß der Maximalbetrag, die Summe und/oder der vorgegebene Zeitraum in der Autorisierungseinrichtung abgelegt sind.

4. Verfahren nach einem der vorhergehenden Ansprüche, dadurch gekennzeichnet, daß der Maximalbetrag, die Summe und/oder der vorgegebene Zeitraum in der elektronischen Geldbörse abgelegt sind.

5. Elektronische Geldbörse, die durch Übertragung von einem Konto ladbar ist und mindestens einen Speicherbereich für das jeweilige Guthaben aufweist, dadurch gekennzeichnet, daß ein weiterer Speicherbereich (31) für einen Maximalbetrag vorgesehen ist, der die zulässige Summe aller in einem vorgegebenen Zeitraum zu ladenden Beträge darstellt.

6. Elektronische Geldbörse nach Anspruch 5, dadurch gekennzeichnet, daß der abgelegte Maximalbetrag nach Autorisierung mit einem dafür vergebenen Zugangsschlüssel veranderbar ist.

7. Elektronische Geldbörse nach einem der Ansprüche 5 oder 6, dadurch gekennzeichnet, daß ein anderer Speicherbereich (33) zur Aufnahme des vorgegebenen Zeitraums vorgesehen ist, der überschreibbar ist, wenn ein Ladekommando eintrifft, das eine Zeitangabe enthält, die nach dem abgelegten Zeitraum liegt und daß dann die in einem zusätzlichen Speicherbereich (32) abgelegte Summe der im vorgegebenen Zeitraum geladenen Beträge zurücksetzbar ist, wobei die Summe auf den dann zu ladenden Betrag gesetzt wird, wenn dieser nicht den zulässigen Maximalbetrag überschreitet.

8. Elektronische Geldbörse nach Anspruch 7, dadurch gekennzeichnet, daß ein in der elektronischen Geldbörse gespeichertes Programm den jeweils zu ladenden Betrag zur Summe aller im vorgegebenen Zeitraum geladenen Beträge addiert, sofern im Ladekommando kein späterer Zeitraum enthalten ist und der Maximalbetrag nicht überschritten wird.
